Europäisches Patentamt

European Patent Office

Office européen des brevets

(11) Publication number: **0 276 088 B1**

(12) EUROPEAN PATENT SPECIFICATION

(45) Date of publication of patent specification: **29.07.92** (51) Int. Cl.⁵: **B23B 31/34**

(21) Application number: **88300296.6**

(22) Date of filing: **14.01.88**

(54) **Method and device for dual positioning of a workpiece in a turning machine.**

(30) Priority: **23.01.87 US 6825**

(43) Date of publication of application:
**27.07.88 Bulletin 88/30**

(45) Publication of the grant of the patent:
**29.07.92 Bulletin 92/31**

(84) Designated Contracting States:
**CH DE IT LI**

(56) References cited:
**US-A- 2 447 711**
**US-A- 2 839 959**
**US-A- 4 008 900**
**US-A- 4 411 440**

(73) Proprietor: **PARKER HANNIFIN CORPORATION**
**17325 Euclid Avenue**
**Cleveland Ohio 44112(US)**

(72) Inventor: **Smith, Kenneth M.**
**15301 Hemlock Point Road**
**Chagrin Falls Ohio 44022(US)**
Inventor: **Rupnik, William H.**
**9351 Hidden Glen Drive**
**Mentor Ohio 44060(US)**
Inventor: **Maxwell, Bryan L.**
**10224 Wilson Mills Road**
**Munson Township Ohio 44024(US)**
Inventor: **Kups, Robert J.**
**6315 Ridgebury Boulevard**
**Mayfield Heights Ohio 44124(US)**

(74) Representative: **Purvis, William Michael**
**Cameron et al**
**D. Young & Co. 10 Staple Inn**
**London WC1V 7RD(GB)**

Rank Xerox (UK) Business Services

## Description

The invention relates to machines for machining workpieces and more particularly to chucks and methods of positioning workpieces in such machines.

The history of turning, milling and tapping machines and the art of operating these machines is extensive. As labour costs have increased, it has become increasingly important to reduce the time for changing bits and rechucking workpieces in these machines since these processes are labour intensive. At the same time, consistency and accurate control of the milling, turning and tapping are required. Achieving the goals of reducing operation time while increasing accuracy is a difficult task and much design work has been devoted to it.

One of the most difficult problems in the design and operation of turning machines involves workpieces which must be turned on more than one axis. In order to machine on a first axis, the workpiece must be positioned in a chuck with the workpiece aligned on the first axis. Since the relationship between the first and second axis of turning is usually critical, the first and second positioning operations must be very carefully made. As a workpiece is fixed in the chuck, the workpiece must be carefully aligned and positioned against locator surfaces in the chuck. This is a time consuming operation. Following machining on the first axis, this time consuming manual operation must be performed on the second axis. Thus, a critical second aligning operation must be done by hand and the hand alignment is both slow and less accurate. Further, it is often not easy to provide a single chuck with locator surfaces capable of grasping the precisely aligning the workpiece for both axes. Thus, some dual axis workpieces require the use of two different turning machines or at least two chucks in addition to requiring two manual chuck loading operations.

One proposal to solve this problem involves a rotatable chuck jaw assembly. A workpiece is clamped in position in the chuck jaw assembly and the chuck jaw assembly is then wedged in a first position in which a turning operation is effected along a first turning axis of the workpiece.

After effecting the first turning axis operations, the chuck rotation is stopped and the chuck jaw assembly is unclamped from the chuck body. The chuck jaw assembly is hingedly connected to the chuck body so that after unclamping it can be rotated to a second turning axis position. The jaw assembly is then clamped again. Clamping of the jaw assembly is achieved by a wedge being fixed against flat positioning surfaces on a periphery of the jaw assembly adjacent a hinge between the jaw assembly and the chuck body.

Although the rotatable jaw assembly has advantages over manually rechucking the workpieces, it is not always possible to use such a rotating jaw assembly. If the second turning axis requires that the workpiece be rotated and translated (moved up or down with respect to the axis of the jaw assembly rotation, for example), a mere rotation of the jaw assembly cannot correctly reposition the workpiece. Further, the rotating chuck still requires manual rotation of the chuck and this means the turning machine must be completely stopped, the machine opened, the jaw assembly unclamped, manually rotated, reclamped, the machine closed, and then reactivated. This is still a time consuming and labour intensive process and the machine and process, therefore, still have not overcome the problem.

Patent Specification US-A-4 411 440 discloses a rotatable chuck jaw assembly for a turning machine wherein a workpiece held between two jaws of the chuck jaw assembly can, after one end of the workpiece has been machined, be turned about an axis transverse to the machining axis to allow machining of portions of the workpiece other than said one end thereof. This design, however, necessitates additional hydraulic means provided in the spindle of the machine tool.

According to one aspect of the invention there is provided a chuck for use with an automatic turning machine having a turning spindle with a draw bar axially disposed and axially movable therein, comprising:

a chuck body fixably attachable to the spindle; and

a jaw assembly in which a workpiece can be held, the jaw assembly being movable in the chuck body between first and second secured positions in which a workpiece can be held in first and second spindle turning axis positions, respectively;

characterised by linkage means for connecting the draw bar and the jaw assembly such that movement of the draw bar to a first position moves and holds the jaw assembly at the first secured position and movement of the draw bar to a second position moves and holds the jaw assembly at the second secured position.

According to another aspect of the invention there is provided a method of moving a workpiece in a chuck of an automatic turning machine according to said one aspect of the invention, from a first turning axis position to a second turning axis position without rechucking the workpiece, characterised by automatically moving the draw bar of the turning machine so as to actuate the linkage means to move the jaw assembly holding the workpiece from the first secured position holding the workpiece in said first turning axis position to the second secured position holding the workpiece in said second turning axis position.

Such a chuck and method can achieve dual position of a workpiece in a turning machine without requiring manual operation to achieve the second turning axis position and can achieve second axis positions which involve both rotation and translation of the workpiece from the first turning axis position. The chuck and method can achieve a variety of rotational and translational dual axis positions and can allow precise realignment of a workpiece in a second turning axis without rechucking the workpiece.

The invention is diagrammatically illustrated by way of example in the accompanying drawings, in which:

Figure 1 is a plan view of a turning machine and a chuck constructed according to the invention;

Figure 2 is a sectional view of the chuck of Figure 1 taken on line 2-2 of Figure 1; and

Figure 3 is a view similar to Figure 2 but taken showing the chuck in a different operating position.

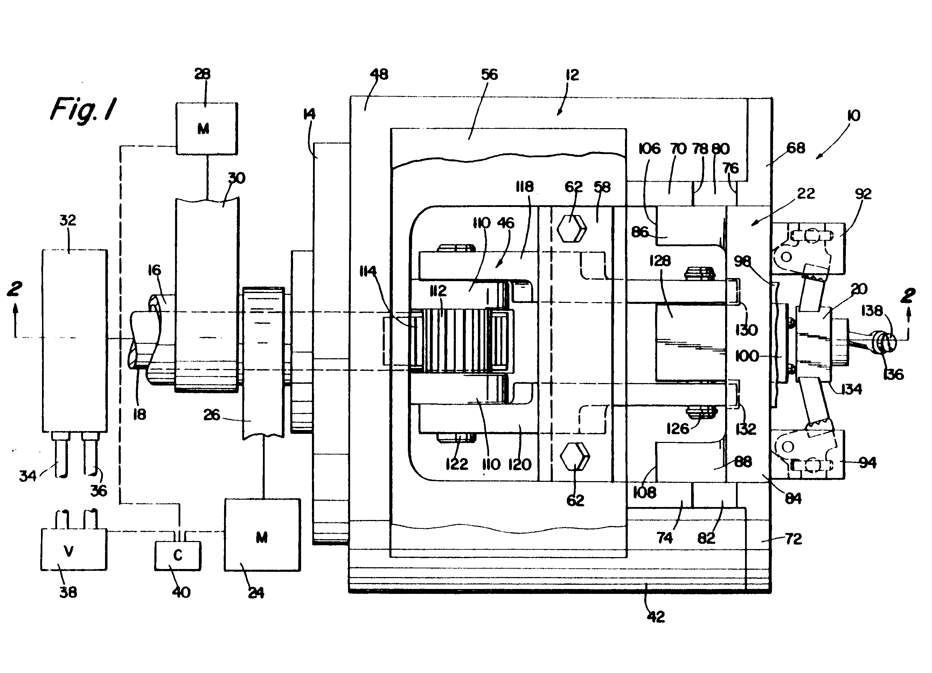

Referring to the drawings and firstly to Figure 1, a turning machine 10 includes a chuck 12, a spindle 14, a drive shaft 16 and a draw bar 18. A workpiece 20 is held in a jaw assembly 22 of the chuck 12. A drive motor 24 is connected to the drive shaft 16 by a drive belt 26 and can rotate the drive shaft 16, the spindle 14, the chuck 12 and the workpiece 20. Thus, the workpiece 20 is rotated for milling or turning about an axis which extends through the axis of the draw bar 18 and the drive shaft 16.

A positioning motor 28 is connected to the drive shaft 16 by a positioning belt 30. When the drive motor 24 is not driving the drive shaft 16 in a turning operation, the positioning motor 28 and the positioning belt 30 can be used to orientate the workpiece 20 in a precise rotational position for milling or tapping at a desired workpiece location by means of a tool or drill positioned for example by auxiliary arms (not shown) advanced to the workpiece by conventional turning machine equipment.

The draw bar 18 is axially movable inside the drive shaft 16. An hydraulic actuator 32 is provided on the distal end of the draw bar 18 opposite the proximate or chuck end of the draw bar. The hydraulic actuator 32 serves axially to extend and axially to retract the draw bar 18. Hydraulic extension and retraction signals are provided to the hydraulic actuator 32 by hydraulic conduits 34 and 36, respectively. A hydraulic control valve 38 regulates the flow of hydraulic fluid through the conduits 34 and 36 and, thereby, the operation of the hydraulic actuator 32.

An electronic control 40 is connected to the hydraulic control valve 38 and the motors 24 and 28 so that the operation of these devices is automatically monitored and controlled. Preferably, the electronic control 40 can be programmed so that a sequence of operations involving the motors and the valve, as well as the advancing and withdrawing of tools to the workpiece 20, can be programmed for automatic operation.

In a conventional turning machine such as a "Mazak 10N", a spindle, a drive shaft, a drive motor, a positioning motor, an hydraulic actuator and an electronic control are provided and configured as shown in Figure 1. In fact, a conventional turning machine can be altered to make use of the invention by using a draw bar and chuck and by programming the electronic control of the turning machine. The electronic control must be reprogrammed since, in a conventional turning machine, the draw bar is axially moved for opening and closing the jaws of the chuck so as to grasp or release a workpiece therein. Accordingly, the program for the electronic control requires that the spindle be motionless and locked before the draw bar can be moved to prevent an accident caused by the workpiece being thrown from the chuck if it were to open while in motion. Thus the draw bar serves as a jaw and workpiece position changer and does not serve as a means for grasping or releasing the workpiece.

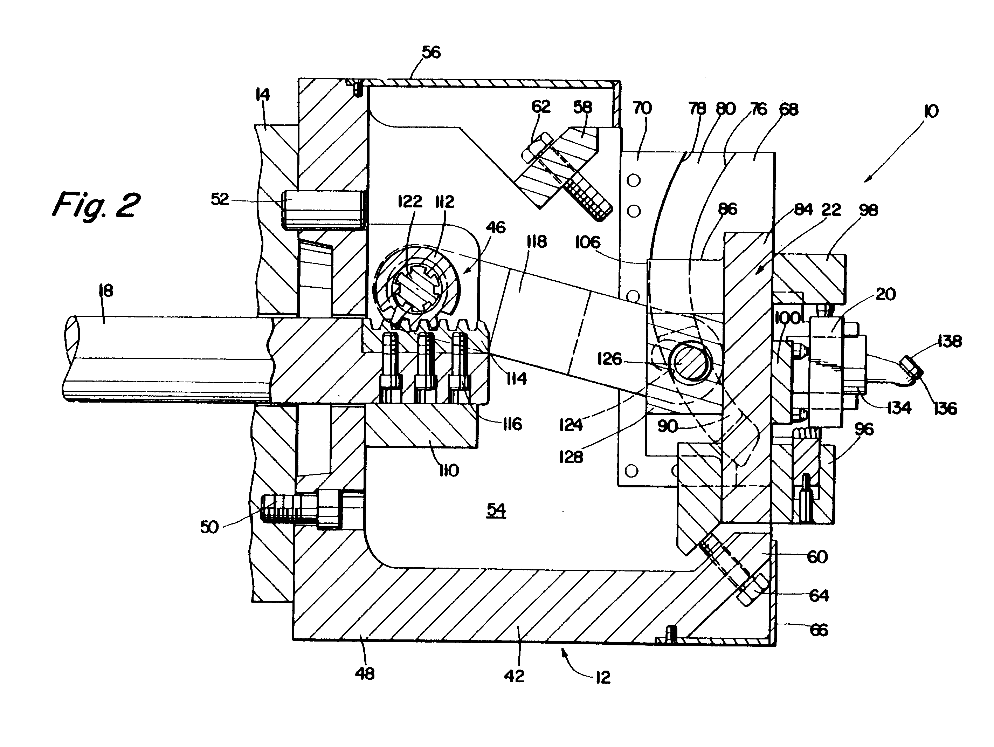

Referring now to Figures 2 and 3 as well as Figure 1, the chuck 12 includes a generally cylindrical body assembly 42 with the jaw assembly 22 mounted at the front thereof and a linkage assembly 46 which functionally joins the draw bar 18 to the jaw assembly 22. The rear of the body assembly 42 is attached to the spindle 14 so that it can be driven thereby. The jaw assembly 22 is mounted at the front end of the body assembly 42 and holds the workpiece 20. The linkage assembly 46 is mounted at the inside rear of the body assembly 42 and extends between the draw bar 18 and the jaw assembly 22.

The main portion of the body assembly 42 is a housing 48. The housing 48 is roughly cylindrical on its exterior with a rectangular cavity formed therein. The rear of the housing 48 is attached by screws 50 and locator pins 52 to the front of the spindle 14. A rectangular opening 54 in the housing 48 is covered by a covering 56 (the covering 56 is shown partially cut-away in Figure 1 so that the internal parts can be viewed). A stop bar 58 extends across the top mid-portion of the opening 54 and a raised lip 60 extends across the bottom front of the opening 54. The stop bar 58 threadedly receives a pair of upper set screws 62 and the raised lip 60 threadedly receives a pair of lower set screws 64. The upper set screws 62 limit the upward travel of the jaw assembly 22 and the lower set screws 64 limit the downward travel of the jaw assembly 22. A front cover 66 extends over the outside of the lower set screws 64.

Facing each other across the side, front of the opening 54 are two pairs of gib plates. A left front gib plate 68 and a left rear gib plate 70 are attached by screws to a left front side of the rectangular opening 54. A right front gib plate 72 and a right rear gib plate 74 are mirror images of the plates 68 and 70 and are attached to a right front side of the opening 54. The left front gib plate 68 has a rearwardly facing convex surface 76 and the left rear gib plate 70 has a frontwardly facing concave surface 78. The surfaces 76 and 78 together form an arcuate cam or keyway 80. A mirror image cam or keyway 82 is formed between the right gib plates 72, 74. The keyways 80 and 82 guide the movement of the jaw assembly between two operation positions for a workpiece 20 held in the jaw assembly 22.

The jaw assembly 22 includes a base plate 84 with rearwardly extending arms 86 and 88. The arms 86 and 88 and the sides of the base plate 84 fit closely between the gib plates 69, 70 on one side and the gib plates 72, 74 on the other side. The base plate 84 slides within the gib plates as guided by arc-shaped keys or cam followers 90 which are fixedly mounted on the outsides of the arms 86 and 88, respectively. As the jaw assembly 22 is raised or lowered in the chuck 12, it must follow the path of the keyway and will be tilted thereby because of the fixed relationship of the keys 90 on the base plate arms 86 and 88. Fixedly mounted on the front of the base plate 84 are gripper blocks 92, 94 and 96, together with locator blocks 98 and 100 (the locator block 98 is shown cut away in Figure 1 to allow the other chuck pieces and the workpiece to be more clearly viewed). The locator blocks 98 and 100 have location stubs which serve as contact members for precise positioning of a workpiece 20 as it is being fixed in the jaw assembly 22. The gripper blocks 92, 94 and 96 have teeth mounted therein which can be adjustably advanced by Allen screws to hold a workpiece 20 so that it will not move with respect to the jaw assembly during machining. An Allen wrench can thus be used to insert or remove a workpiece from its position in the blocks on the front of the base plate 84.

A stop block 102 is mounted at the bottom rear of the base plate 84 between the arms 86 and 88. A positioning surface 102 of the stop block 102 projects out from the base plate 84 to encounter the lower set screws 64 as the jaw assembly 22 moves downwardly guided by the keyways 80, 82. The location of the positioning surface 104 and the adjustment of the set screws 64 determine a lower stop position of the jaw assembly 22 shown in Figure 2.

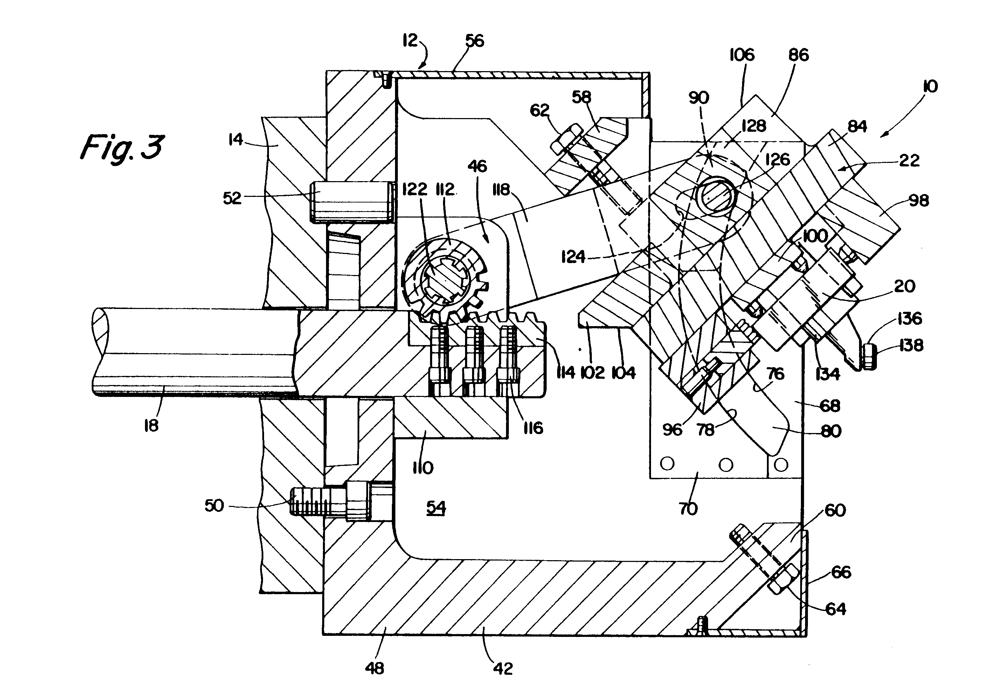

An upper stop position of the jaw assembly 22 shown in Figure 3 is determined by the upper set screws 62 encountering rear facing surfaces 106 and 108 of the base plate arms 86 and 88, respectively. Thus, as the jaw assembly 22 moves upwardly guided by the keyways 80 and 82, the rear facing surfaces 106 and 108 encounter the upper set screws 62 and prevent further upward movement.

The gib plates 68, 70 and 72, 74 are attached to the housing 48 by removable screws. Similarly, the keys or cam followers 90 which move in the keyways 80 and 82 are attached to the base plate 84 by removable screws. Accordingly, the keys and keyways can be changed to provide a different positioning of the jaw assembly 22 at either or both of the first or second axis positions. Minor adjustments to these positions can be made by screwing the set screws 62 and 64 in or out.

The linkage assembly 46 includes a gearbox 110 fixed to the inside of the rear of the housing 48 so that the draw bar 18 can extend therethrough. A pinion or spur gear 112 is mounted for rotation in the upper portion of the gearbox 110. The spur gear 112 meshes with a rack 114 attached to the top of the draw bar 18 by screws 116. Thus, the rack and pinion of the linkage 46 convert the rectilinear motion of the draw bar 18 into a rotational motion.

The linkage 46 also includes a pair of linkage arms 118, 120. Rear ends of the linkage arms 118, 120 are fixed to rotate with the spur gear 112 by a splined shaft 122 which is mounted for rotation in the gearbox 110, but fixes the relative rotational positions of the linkage arms 118, 120 and the spur gear 112.

Slots 124 are provided in front ends of the linkage arms 118, 120. A pivot pin 126 of the jaw assembly 22 is received through the slots 124. The pivot pin 126 is fixed to the base plate 84 of the jaw assembly 22 by a pivot block 128. The pivot block 128 is attached to the centre, rear of the base plate 84. Recesses 130, 132 are provided in the base plate 84 to allow the ends of the arms 118, 120 freedom of movement. The slots 124 in the arms 118, 120 allow the pivot pin 126 to move longitudinally of the arms so that the radial motion of the arms need not be followed by the jaw assembly 22 since the jaw assembly 22 must follow the keyways 80, 82.

Depending on the shape of the arcuate keyways 80, 82 and the amount of translational movement of the jaw assembly 22, an imbalance may result in the chuck. The imbalance can be corrected by adding weight at a position which balances the jaw assembly about its two axis positions or minor imbalances can be tolerated if the turning machine characteristics will permit.

When used on a full size automatic turning machine, the housing 48 may have a diameter of approximately 25 cm (10 inches) and the draw bar may have an axial stroke of approximately 2.5 cm (1 inch). Although these dimensions are not critical, they indicate the range of motion which is desirable and feasible.

In operation, a workpiece 20 is mounted in the gripper and locator blocks 92-100 by manually positioning the workpiece 20 on the location stubs and using an Allen wrench to tighten the Allen screws so that the teeth of the gripper blocks are moved against and retain the workpiece 20. The motor 24 is then operated by means of the electronic control 40 to drive the spindle 14, and the chuck 12. This rotates the workpiece about a first turning axis as shown in Figures 1 and 2. The electronic control 40 automatically advances machining tools to perform machining operations on the workpiece 20 in a desired sequence. For example, in the turning operation about the first turning axis, a tool could be advanced automatically to machine an outer collar surface 134 of the workpiece 20.

During the first turning axis operation the draw bar 18 is held in a pressure retracted position by the hydraulic actuator 32. This retracted pressure position prevents the jaw assembly 22 from moving by maintaining a downward pressure on the jaw assembly 22 through the linkage assembly 46. This maintains pressure on the stop block 102 which contacts the lower set screws 64 retaining the jaw assembly 22 in a fixed position in the chuck 12.

Once machining operations are completed on the first turning axis, the electronic control 40 automatically signals the hydraulic control valve 38 to move the draw bar 18 by means of the hydraulic actuator 32. This movement can occur while the chuck is rotating and the drive motor 24 remains at full speed. The draw bar 18 then extends to the position shown in Figure 3. The extension of the draw bar 18 drives the rack 114 and pinion 112 to rotate the linkage arms 118, 120. This raises the jaw assembly 22 which must follow the keyways 80, 82 resulting in the desired rotation and translation of the jaw assembly 22 and the workpiece 20 held therein. The upward movement of the nozzle assembly 22 is stopped by the rear facing surfaces 106, 108 of the base plate arms 86, 88 encountering the upper set screws 62, 64. The draw bar 18 retains the upward pressure on the jaw assembly 22 by means of the hydraulic actuator 32. This retains the jaw assembly in its upper position and prevents movement of the jaw assembly and the workpiece 20 while it is being machined in the second turning axis position shown in Figure 3.

Following the movement of the workpiece 20 to the second turning axis position, the electronic control 40 automatically actuates the advancement of tools to operate on the workpiece 20. For example, tools could be automatically advanced to machine a nozzle periphery 136 and a nozzle orifice 138.

Following the automatic turning operations at the second turning axis position of the workpiece 20, the electronic control 40 causes the draw bar 18 to be retracted to the first turning axis position shown in Figures 1 and 2 as the motor 24 is deactivated to halt the driving of the chuck 12. The positioning motor 28 can then be actuated to position the chuck in readiness for removal of the workpiece 20 and insertion of a new workpiece. With the chuck automatically stopped and locked, a manual operation of removing the workpiece by loosening the Allen screws on the gripper blocks can be performed removing the completed workpiece 20. The chuck and machine are then in readiness for repeating the operation on a new workpieces.

The apparatus described allows automatic repositioning of dual axis workpieces saving a considerable amount of manual time which would otherwise be required for rechucking the workpiece. Moreover precisely accurate repositioning can be obtained.

**Claims**

1. A chuck (12) for use with an automatic turning machine having a turning spindle (14) with a draw bar (18) axially disposed and axially movable therein, comprising:

   a chuck body (42) fixably attachable to the spindle (14); and

   a jaw assembly (22) in which a workpiece (20) can be held, the jaw assembly (22) being movable in the chuck body (42) between first and second secured positions in which a workpiece (20) can be held in first and second spindle turning axis positions, respectively;

   characterised by linkage means (46) for connecting the draw bar (18) and the jaw assembly (22) such that movement of the draw bar (18) to a first position moves and holds the jaw assembly (22) at the first secured position and movement of the draw bar (18) to a second position moves and holds the jaw assembly (22) at the second secured position.

2. A chuck according to claim 1, wherein the jaw assembly (22) has a pair of keys (90) disposed on opposite sides of the jaw assembly (22) and wherein the chuck body (42) has a pair of arcuate keyways (80, 82) in which the keys (90) are slidably received so as to allow the jaw assembly (22) to move in the chuck body (42) between said first and second secured positions.

**3.** A chuck according to claim 2, wherein the arcuate keyways (80, 82) are shaped so that the movement between said first and second spindle turning axis positions of the workpiece (20) involves translation of the workpiece in addition to rotation.

**4.** A chuck according to claim 3, wherein the chuck body (42) and the jaw assembly (22) have mating, adjustable stop means (58, 60, 62, 64, 102, 104, 106) adjustable to limit the relative motion of the jaw assembly (22) in the chuck body (42) to define said first and second secured positions.

**5.** A chuck according to claim 4, wherein the mating adjustable stop means comprise first and second set screws (64, 62) threadedly received in the chuck body (42), the first set screw (64) defining the first secured position and the second set screw (62) defining the second secured position.

**6.** A chuck according to claim 3, wherein the linkage means (46) comprises a rack (114) mounted on the draw bar (18), a pinion (112) received on the rack (114) and to be moved thereby, and a linkage arm (118, 120) connected at one end to the pinion (112) and at the other end of the jaw assembly (22).

**7.** A chuck according to claim 6, wherein the jaw assembly (22) includes a pivot pin (126) to which the linkage arm (118, 120) is attached and wherein the linkage arm (118, 120) has a slot (124) therein which receives the pivot pin (126) so that the pivot pin (126) can rotate within and move along the length of the slot (124) as the keys (90) move in the arcuate keyways (80, 82) between the first and second secured positions of the jaw assembly (22).

**8.** A method of moving a workpiece (20) in a chuck of an automatic turning machine according to claim 1, from a first turning axis position to a second turning axis position without rechucking the workpiece (20), characterised by automatically moving the draw bar (18) of the turning machine so as to actuate the linkage means (46) to move the jaw assembly (22) holding the workpiece (20) from the first secured position holding the workpiece (20) in said first turning axis position to the second secured position holding the workpiece (20) in said second turning axis position.

**9.** A method according to claim 8, wherein the moving step comprising moving the jaw assembly (22) in an arc so that as it moves between the first and second turning axis positions the workpiece is translated as well as rotated.

**10.** A method according to claim 9, wherein the step of moving the jaw assembly (22) in an arc comprises axially moving the draw bar (18) and converting such axial movement to an arcuate movement of the jaw assembly (22) by means of a rack (114) and pinion (112) linkage.

**Revendications**

**1.** Un mandrin (12) destiné à être utilisé avec un tour automatique ayant une broche rotative (14) avec un arbre extensible (18) disposé axialement et déplaçable axialement à l'intérieur de cette dernière comprenant;
un corps du mandrin (42) qui peut être attaché solidairement à la broche (14); et un ensemble de mors (22) dans lequel une pièce à usiner (20) peut être maintenue, l'ensemble de mors (22) étant agencé déplaçable dans le corps du mandrin (42) entre une première et une seconde position de serrage dans lequel une pièce à usiner (20) peut être maintenue dans une première respectivement seconde position axiale de la broche rotative; caractérisé par des moyens de liaisons (46) pour relier l'arbre extensible (18) à l'ensemble de mors (22) de telle sorte qu'un mouvement de l'arbre extensible (18) vers une première position déplace et maintienne l'ensemble de mors (22) dans une première position de serrage et que le déplacement de cet arbre extensible (18) dans une seconde position déplace et maintienne l'ensemble de mors (22) dans la seconde position de serrage.

**2.** Mandrin selon la revendication 1 caractérisé par le fait que l'ensemble de mors (22) a une paire de cames (90) situées sur des côtés opposés de l ensemble de mors (22) et dans lequel le corps du mandrin (42) a une paire de logements en forme d'arc (80,82) dans lesquels les cames (90) sont agencées coulissante de telle façon que l'ensemble de mors (22) puisse se déplacer dans le corps du mandrin (42) entre les dites première et seconde positions de serrage.

**3.** Mandrin selon la revendication 2 caractérisé par le fait que les logements en forme d'arc (80,82) sont conformés de telle façon que le mouvement entre les dites première et seconde positions axiales de la broche rotative de la pièce à usiner (20) entraîne une translation de la pièce à usiner en plus de sa rotation.

4. Mandrin selon la revendication 3, caractérisé par le fait que le corps du mandrin (42) et l'ensemble de mors (22) ont des moyens d'arrêt et d'accouplement réglables (58,60,62,64,102,104,106) afin de limiter le déplacement relatif de l'ensemble de mors (22) dans le corps du mandrin (42) définissant ainsi les dites première et seconde position de serrage.

5. Mandrin selon la revendication 4, caractérisé par le fait que les moyens d'arrêt et d'accouplement réglables comportent un premier et un second jeu de vis (64,62) prévues pour être reçues dans un filetage du corps du mandrin (42), le premier jeu de vis (64) définissant la première position de serrage et le second jeu de vis (62) définissant la seconde position de serrage.

6. Mandrin selon la revendication 3 caractérisé par le fait les moyens de liaisons (46) comportent une crémaillère (114) montée sur l'arbre extensible (18), un pinion (112) accouplé à la crémaillère (114) pouvant se déplacer sur cette dernière, et un bras de liaison (118,120) couplé à une extrémité au pinion (112) et à l'autre extrémité à l'ensemble de mors (22).

7. Mandrin selon la revendication 6, caractérisé par le fait que l'ensemble de mors (22) comprend un axe de pivotement (126) auquel le bras de liaison (118,120) est fixé et par le fait que le bras de liaison (118,120) a un logement (124) lui permettant de recevoir l'axe de pivotement (126) de telle sorte que l'axe de pivotement (126) puisse tourner dedans et se déplacer le long de la longueur du logement (124) lorsque les cames (90) se déplacent dans les logements un forme d'arc (80,82) entre la première et la deuxième position de serrage de l'ensemble de mors (22).

8. Une méthode de déplacer une pièce à usiner (20) dans un mandrin d'un tours automatique selon la revendication 1, d'une première position axiale vers une seconde position axiale sans avoir à remandriner la pièce à usiner (20), caractérisée par une déplacement automatique de l'arbre extensible (18) du tour afin de mettre en mouvement les moyens de liaison (46) pour déplacer l'ensemble de mors (22) maintenant la pièce à usiner de la première position de serrage maintenant la pièce à usiner (20) dans la dite première position axiale vers la seconde position de serrage maintenant la pièce à usiner (20) dans la seconde position axiale.

9. Une méthode selon la revendication 8, caractérisée par le fait que dans l'étape de déplacement comprenant le déplacement de l'ensemble de mors (22) selon un arc de telle sorte qu'il se déplace entre les première et deuxième positions axiales de rotation et la pièce à usiner est déplacée à la fois en translation et en rotation.

10. Une méthode selon la revendication 9 caractérisée par le fait que l'étape de déplacement de l'ensemble de mors (22) selon un arc comprend un déplacement axial de l'arbre extensible (18) et la transformation de ce déplacement axial en un déplacement selon un arc de l'ensemble de mors (22) au moyen d'une crémaillère (114) et d'un pinion de liaison (112).

**Patentansprüche**

1. Spannfutter (12) zur Verwendung in einer automatischen Drehmaschine mit einer Drehspindel (14) mit einer darin axial angeordneten und axial bewegbaren Zugstange (18), mit
einem Spannfutterkörper (42), der fixierbar an der Spindel (14) anbringbar ist, und
einer Klemmbackenanordnung (22), in der ein Werkstück (20) gehalten werden kann, wobei die Klemmbackenanordnung (22) in dem Spannfutterkörper (42) zwischen ersten und zweiten gesichterten Positionen verfahrbar ist, in denen ein Werkstück (20) in jeweils ersten und zweiten Spindeldrehachsenpositionen gehalten werden kann,
**gekennzeichnet durch**
Verbindungsmittel (46) zum verbinden der Zugstange (18) mit der Klemmbackenanordnung (22) in der Art und Weise, daß ein Verfahren der Zugstange (18) in eine erste Position die Klemmbackenanordnung (22) in die erste gesicherte Position bewegt und dort hält, und daß ein Verfahren der Zugstange (18) in eine zweite Position die Klemmbackenanordnung (22) in die zweite gesicherte Position bewegt und dort hält.

2. Spannfutter nach Anspruch 1, bei dem die Klemmbackenanordnung (22) ein Paar von Keilen (90) aufweist, die sich auf entgegengesetzten Seiten der Klemmbackenanordnung (22) befinden, und bei dem der Spannfutterkörper (42) ein Paar von gekrümmten Keilnuten (80,82) aufweist, in denen die Keile (90) derart aufgenommen werden, daß sie darin gleiten können, um so eine Bewegung der Klemmbackenanordnung (22) in dem Spannfutter (42) zwischen ersten und zweiten gesicherten Positionen zu ermöglichen.

3. Spannfutter nach Anspruch 2, bei dem die gekrümmten Keilnuten (80,82) so ausgeformt sind, daß die Bewegung zwischen den ersten und zweiten Spindeldrehachsenpositionen des Werkstücks (20) zusätzlich zu der Drehung des Werkstücks auch eine Translation desselben mit sich bringt.

4. Spannfutter nach Anspruch 3, bei dem der Spannfutterkörper (42) und die Klemmbackenanordnung (22) zusammenpassende einstellbare Anschlagmittel (58,60,62,64,102,104,106) aufweisen, die einstellbar sind, um die Relativbewegung der Klemmbackenanordnung (22) in dem Spannfutterkörper (42) zu begrenzen, um so die ersten und zweiten gesicherten Positionen festzulegen.

5. Spannfutter nach Anspruch 4, bei dem die zusammenpassenden einstellbaren Anschlagmittel erste und zweite Stellschrauben (64,62) umfassen, die in den Spannfutterkörper (42) eingeschraubt sind, wobei die erste Stellschraube (64) die erste gesicherte Position und die zweite Stellschraube (62) die zweite gesicherte Position festlegt.

6. Spannfutter nach Anspruch 3, bei dem die Verbindungsmittel (46) eine an der Zugstange (18) angebrachte Zahnstange (114), ein auf der Zugstange (114) aufgenommenes und von dieser bewegtes Ritzel (112) und einen Verbindungsarm (118,120) umfaßt, der an einem Ende mit dem Ritzel (112) und an dem anderen Ende mit der Klemmbackenanordnung (22) verbunden ist.

7. Spannfutter nach Anspruch 6, bei dem die Klemmbackenanordnung (22) einen Drehzapfen (126) umfaßt, an dem der Verbindungsarm (118,120) angebracht ist, und wobei der Verbindungsarm (118,120) in sich einen Schlitz (124) aufweist, in dem der Drehzapfen (126) aufgenommen wird, so daß sich der Drehzapfen (126) innerhalb des Schlitzes (124) drehen und entlang dessen Länge bewegen kann, während sich die Keile (90) in den gekrümmten Keilnuten (80,82) zwischen den ersten und zweiten gesicherten Positionen der Klemmbackenanordnung (22) bewegen.

8. Verfahren zum Bewegen eines sich in einem Spannfutter einer automatischen Drehmaschine nach Anspruch 1 befindenen Werkstücks (20) von einer ersten Drehachsenposition in eine zweite Drehachsenposition, ohne das Werkstück (20) umzuspannen,

**gekennzeichnet durch**

automatisches Bewegen der Zugstange (18) der Drehmaschine, um die Verbindungsmittel (46) so zu betätigen, daß die das Werkstück (20) haltende Klemmbackenanordnung (22) von der ersten gesicherten Position, in der das Werkstück (20) in der ersten Drehachsenposition gehalten wird, in die zweite gesicherte Position bewegt wird, in der das Werkstück (20) in der zweiten Drehachsenposition gehalten wird.

9. Verfahren nach Anspruch 8, bei dem der Bewegungsschritt das Verfahren der Klemmbackenanordnung (22) in einem Bogen umfaßt, so daß das Werkstück, während es sich zwischen ersten und zweiten Drehachsenpositionen bewegt, sowohl translatiert als auch gedreht wird.

10. Verfahren nach Anspruch 9, bei dem der Schritt des Bewegens der Klemmbackenanordnung (22) in einem Bogen das axiale Bewegen der Zugstange (18) sowie das Umwandeln dieser Axialbewegung in eine bogenförmige Bewegung der Klemmbackenanordnung (22) mittels einer Verbindung von Zahnstange (114) und Ritzel (112) unfaßt.

Fig. 1

Fig. 2

10

Fig. 3